# EUROPÄISCHE PATENTSCHRIFT

(11) **EP 1 776 854 B1**
(45) Veröffentlichungstag und Bekanntmachung des Hinweises auf die Patenterteilung: **17.12.2008**
(21) Anmeldenummer: 06021383.2
(22) Anmeldetag: 12.10.2006
(51) Int. Cl.: A01D 34/66

(54) **Scheibenmähwerk**
Disc cutter bar
Barre de coupe à disques

(30) Priorität: 18.10.2005 DE 102005050187
(43) Veröffentlichungstag der Anmeldung: 25.04.2007
(73) Patentinhaber: CLAAS Saulgau GmbH, 88348 Bad Saulgau (DE)
(72) Erfinder: Prenzler, Jürgen, 88379 Oberwaldhausen (DE)

(56) Entgegenhaltungen:
- EP-A- 0 965 258
- DE-A1- 2 640 704
- FR-A1- 2 840 765
- NL-A- 7 100 850
- US-A- 4 237 679

## Beschreibung

Die Erfindung betrifft einen Mähbalken für Scheibenmähwerke zur Verbesserung der Schnittqualität, insbesondere für die Grünfutterernte, in der Landwirtschaft gemäß dem Oberbegriff des unabhängigen Anspruchs 1 (siehe EP-A-965258).

Derartige Mähwerke gibt es in vielfältigen Variationen, wie beispielsweise Heck-, Seiten-, Front- oder gezogene Mähwerke, oder Kombinationen aus vorgenannten Mähwerken und auch für selbstfahrende Mähwerke, oder auch für Direktfutterschneidwerke für Feldhäcksler.

### Stand der Technik

Bekannt sind Scheibenmähwerke mit umlaufenden Mähwerkzeugen, deren Mähklingen frei- bzw. schwenkbeweglich am Umfang der Mähscheiben an einem Zapfen aufgehängt sind. Die Mähklingen werden erst durch die Zentrifugalkraft stabilisiert und mähen das Grünfutter dann ohne Gegenschneide ab. Dabei sind die Mähscheiben antriebsseitig mit dem Motor eines Trägerfahrzeugs verbunden und zugleich in einer Antriebskette, bestehend aus Zahnrädern, welche unterhalb der Mähscheiben in einem geschlossenen Getriebegehäuse gelagert und untergebracht sind, eingebunden.

Bekannt sind Getriebegehäuse, bestehend aus abgekanteten Stahlblechwannen mit einem verschraubten oder verschweißten oberen Getriebedeckel, indem die Getriebekette und die Mähscheiben gelagert sind. Durch die Fertigungstechnik des Abkantens sind die Stahlblechwannen in ihrer Längserstreckung als Prisma ausgebildet, welches den Nachteil beinhaltet, dass die von den Flugkreisen der Messerklingen überdeckten Schnittflächen stärker eingeschränkt sind, als dieses zwingend notwendig wäre, so dass dieses das Mähbild insbesondere bei am Boden liegendem Grünfutter negativ beeinträchtigt, wodurch die unerwünschte Streifenbildung durch ungleichmäßige Stoppellänge im Mähbild gefördert wird.

### Aufgabenstellung

Die Erfindung befasst sich mit diesem Problem der unerwünschten Streifenbildung, und damit, das Schneidverhalten und die Schnittqualität von Scheibenmähwerken zu verbessern.

### Lösung der Aufgabe

Gelöst wird die Aufgabe der Erfindung mit den kennzeichnenden Merkmalen des Anspruchs 1. Weitere vorteilhafte Ausgestaltungen der Erfindung sind dem abhängigen Anspruch, der Beschreibung und den Figurendarstellungen zu entnehmen.

Das Scheibenmähwerk nach der Erfindung besitzt ein Getriebegehäuse, welches eine vergrößerte Schnittfläche zum Mähen des Grünfutters am Boden und damit eine große Angriffsfläche für die Mähklingen darbietet. Erreicht wird dieses, indem die vordere Kontur des Getriebegehäuses so ausgestaltet ist, dass die Zahnräder der Getriebekette möglichst eng von der Seitenwand wellenförmig umschlossen werden. Die damit einhergehende Schwächung des Flächenträgheitsmoments im Querschnitt des Getriebegehäuses kann durch eine verstärkte Seitenwand des Getriebegehäuses kompensiert werden. Die Seitenwand ist daher als Hohlprofil ausgebildet. Das Hohlprofil kann dabei gleichzeitig als Kühlmittel führendes Element ausgebildet sein, welches dazu dienen kann, dem Getriebegehäuse die Abwärme des Getriebeöls zu entziehen, um somit die Lebensdauer des Getriebeöls zu erhöhen.

### Ausführungsbeispiel

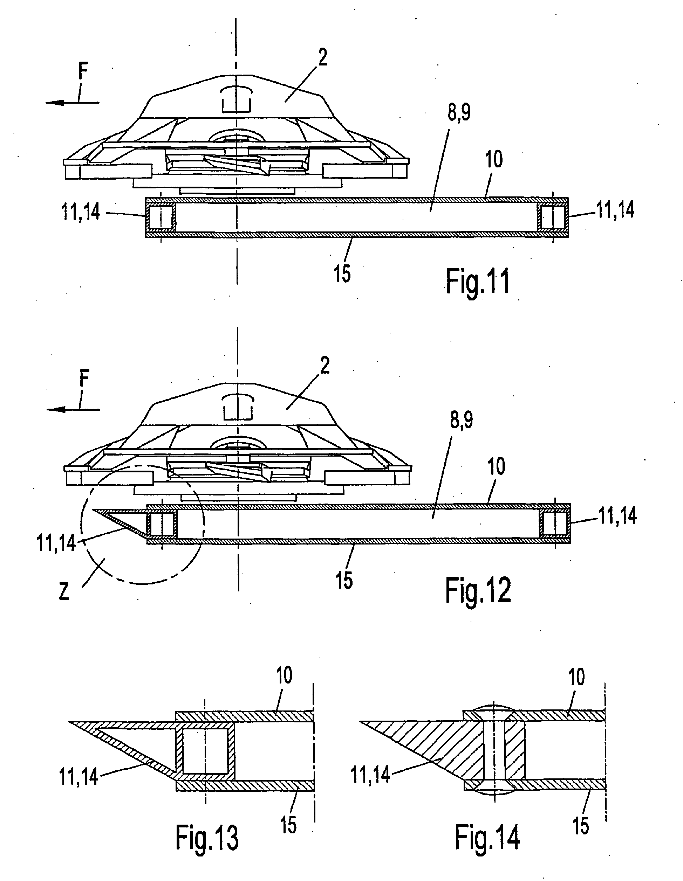

Nähere Einzelheiten der Erfindung sind den nachfolgenden Figurendarstellungen und deren Beschreibungen zu entnehmen, wobei Figur 14 kein Ausführungsbeispiel der Erfindung zeigt.

Es zeigen:
- Fig. 1: zeigt einen Mähbalken in einer Draufsicht mit offenem Getriebegehäuse, so dass die Antriebskette sichtbar ist
- Fig. 2: zeigt den Mähbalken in einer Ansicht von hinten entgegen der Fahrtrichtung
- Fig. 3: zeigt die Untenansicht des Mähbalkens
- Fig. 4: zeigt einen Ausschnitt aus der Untenansicht gemäß Ansicht X des Mähbalkens der Fig. 2 in perspektivischer Ansicht
- Fig. 5: zeigt den Ausschnitt analog Fig. 4, jedoch mit geöffnetem Getriebegehäuse, so dass ein Teil der Antriebskette sichtbar ist
- Fig. 6: zeigt einen Ausschnitt aus der Untenansicht gemäß Ansicht Y des Mähbalkens der Fig. 2 in perspektivischer Ansicht
- Fig. 7: zeigt den Ausschnitt analog Fig. 6, jedoch mit geöffnetem Getriebegehäuse, so dass ein Teil der Antriebskette sichtbar ist
- Fig. 8: zeigt die Ansicht Fig. 7 in diametraler Ansicht
- Fig.9: zeigt das Mähwerk gemäß Fig.1 in einer Draufsicht ohne Mähscheiben zur besseren Kenntlichmachung des wellenförmigen Verlaufs der Außenwand des Getriebegehäuses
- Fig.10: zeigt das Mähwerk gemäß Fig.1 in einer Draufsicht ohne Mähscheiben in vereinfachter Darstellung mit Kenntlichmachung des Zugewinns an Schnittfläche
- Fig.11 1: zeigt den Schnitt A-A durch den Mähbalken gemäß Fig.4
- Fig.12: zeigt den Schnitt A-A durch den Mähbalken gemäß Fig.4, jedoch mit einer alternativen Ausführung der vorderen Seitenwandausgestaltung
- Fig.13: zeigt die Einzelheit Z gemäß Fig.12 in vergrößerter Darstellung
- Fig.14: zeigt die Einzelheit Z gemäß Fig.12 in vergrößerter Darstellung jedoch mit einer alternativen Ausführung der vorderen Seitenwandausgestaltung als vollwandiger Querschnitt

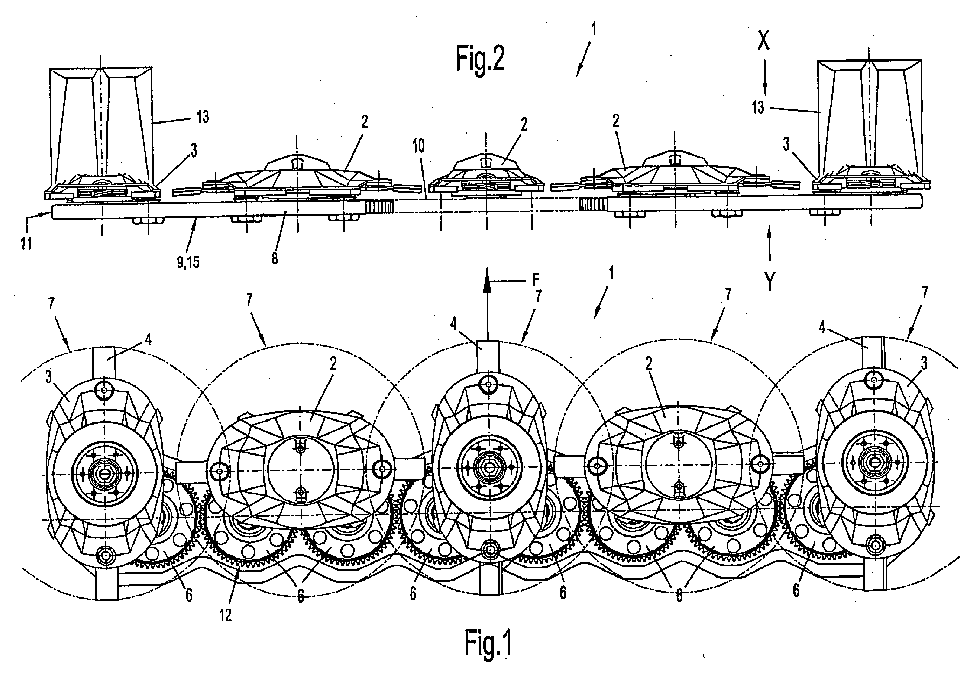

In Fig. 1 ist ein Mähbalken 1 in einer Draufsicht mit offenem Getriebegehäuse 8 dargestellt, so dass die Antriebskette 12 mit den Stirnrädern 6 sichtbar ist. Das offene Getriebegehäuse 8 dient lediglich der besseren Sichtbarmachung und Beschreibung der Antriebskette 12, bestehend aus den in Reihe liegenden Stirnrädern 6 einschließlich der Zahnritzel zum Antrieb der Mähscheiben 2. Die Antriebskette 12 besteht somit aus den Stirnrädern 6 und den Ritzeln 5, welche antriebsseitig mit dem Motor eines Trägerfahrzeugs in Verbindung stehen.

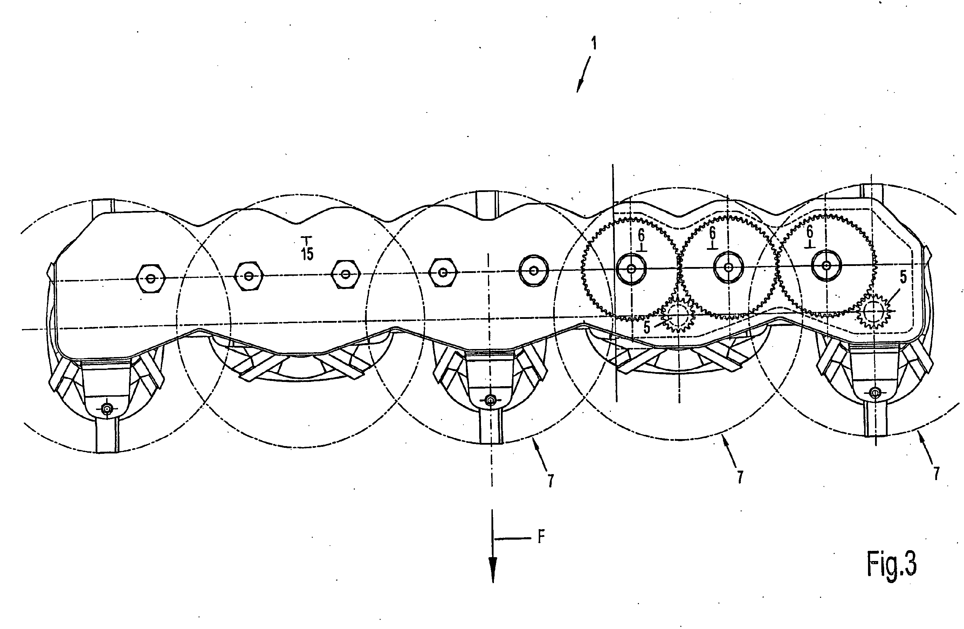

In Fig. 2 ist der Mähbalken 1 in einer Ansicht entgegen der Fahrtrichtung F von hinten, und in Fig. 3 die Untenansicht des Mähbalkens 1 dargestellt.

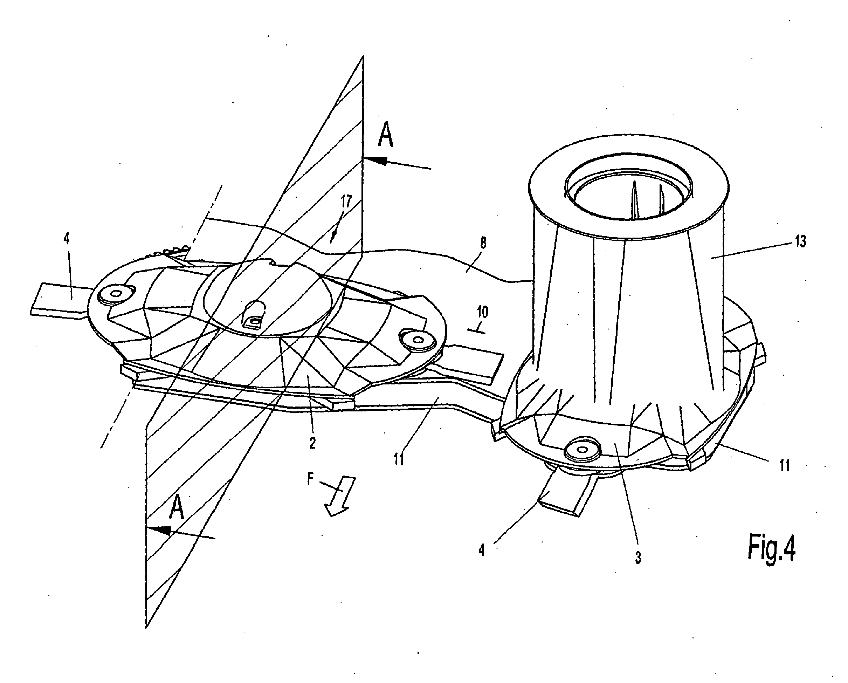

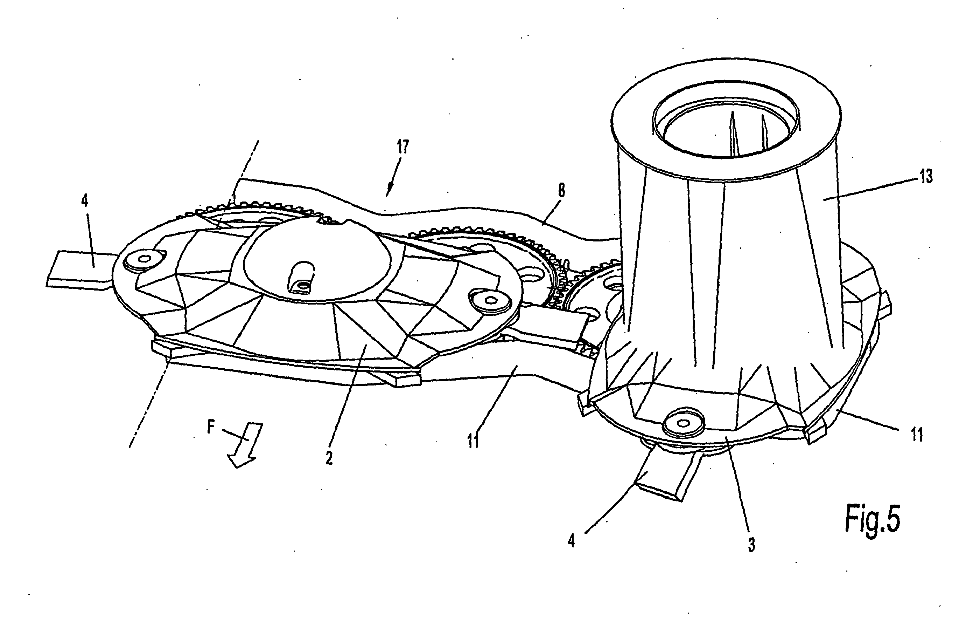

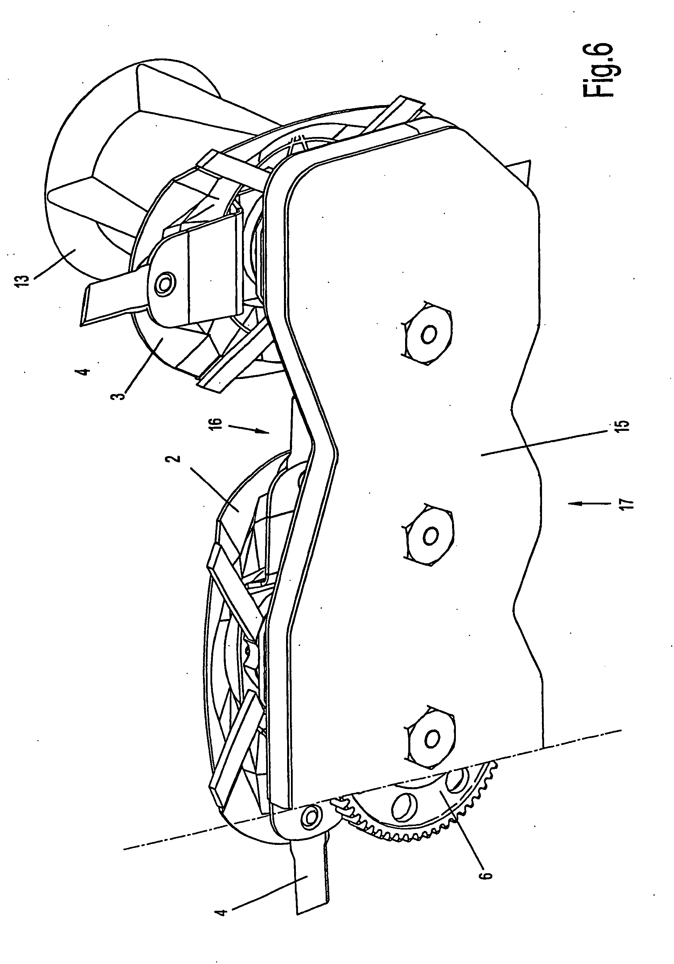

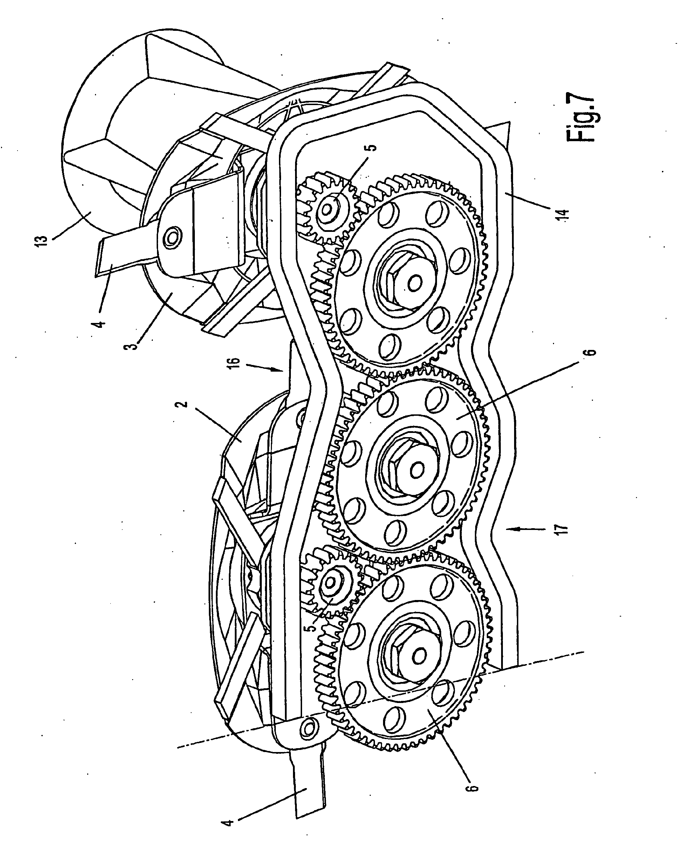

In Fig. 4 ist ein Ausschnitt aus der Untenansicht gemäß Ansicht X des Mähbalkens 1 der Fig. 2 in perspektivischer Ansicht, und in Fig. 5 ist analog der Fig. 4 das Getriebegehäuse in geöffnetem Zustand, jedoch mit geöffnetem Getriebegehäuse dargestellt, so dass ein Teil der Antriebskette sichtbar ist. In Fig. 6 ist ein Ausschnitt aus der Untenansicht gemäß Ansicht Y des Mähbalkens der Fig. 2 in perspektivischer Ansicht dargestellt und Fig. 7 zeigt den Ausschnitt analog Fig. 6, jedoch mit geöffnetem Getriebegehäuse 8, so dass ein Teil der Antriebskette 12, bestehend aus den Stirnrädern 6 und den Ritzeln 5, sichtbar ist.

Oberhalb des Mähbalkens 1 befinden sich in bekannter Anordnung die äußeren Mähscheiben 3 mit aufgesetzten Fördertrommeln 13 und den inneren Mähscheiben 2. Die äußeren und inneren Mähscheiben sind an ihrem Umfang in bekannter Weise mit Mähklingen 4 bestückt, deren äußere Kontur während des Umlaufs der Mähscheiben die Flugkreise 7 überstreichen. Die Antriebskette 12 besteht aus den Stirnrädern 6 und den Ritzeln 5, wobei die Ritzel 5 eine Antriebswelle aufweisen, welche im Getriebedeckel 9 des Getriebegehäuses 8 gelagert ist und wobei die Mähscheiben 2,3 mit dem jeweiligen Ritzel 5 eine drehfeste Verbindung eingehen.

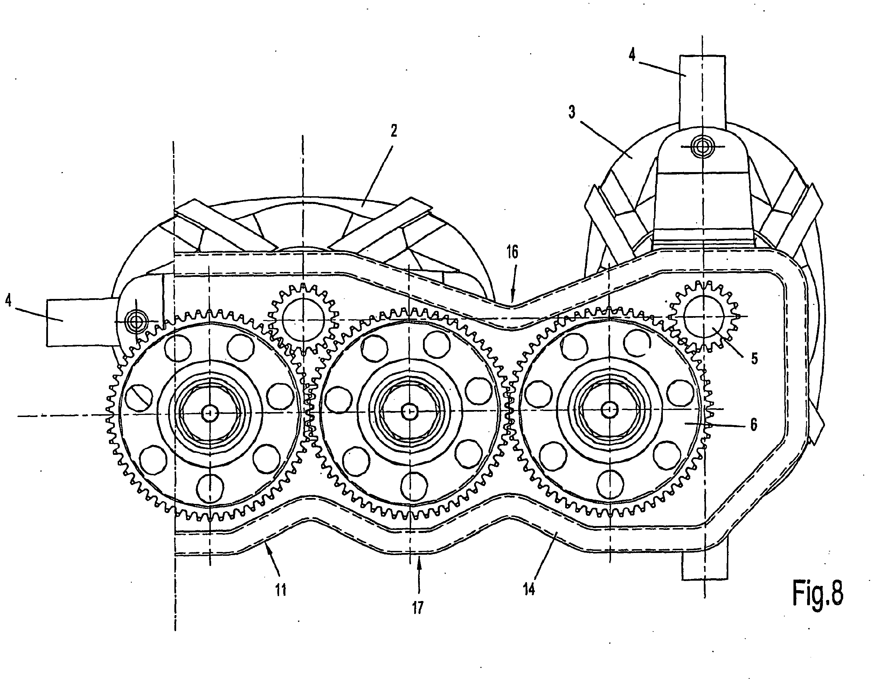

Die Getriebeseitenwand 11 des Getriebegehäuses 8 besteht aus einem Hohlprofil 14, welches wie in Fig. 7 bzw. Fig. 8 dargestellt, der Kontur der Antriebskette 12 folgend, diese umschließt. Dabei ist in Fig. 8 ein Ausschnitt aus dem Mähbalken 1 gemäß Fig. 2 die Ansicht Y ohne den Getriebewannenboden 15 dargestellt. In dem Ausführungsbeispiel ist das Hohlprofil 14 als Rechteckhohlprofil dargestellt.

Das Hohlprofil 14 kann wahlweise entweder mit dem Getriebedeckel 10 oder mit dem Getriebewannenboden verschweißt sein, so dass Getriebewannenboden und Getriebedeckel beispielsweise miteinander verschraubt werden können. Möglich ist auch, dass Getriebewannenboden und Getriebewannendeckel nach der Montage der Getriebekette dauerhaft miteinander verschweißt werden. Dadurch bedingt, dass das Hohlprofil 14 als Getriebeseitenwand die Ritzel 5 und die Stirnräder 6 möglichst eng umschließt, können die Konturkreise der Mähklingen eine größere Fläche überdecken, als dieses der Fall wäre, wenn der Mähbalken an der Vorder- bzw. Hinterseite eine gerade verlaufende Kontur aufweisen würde.

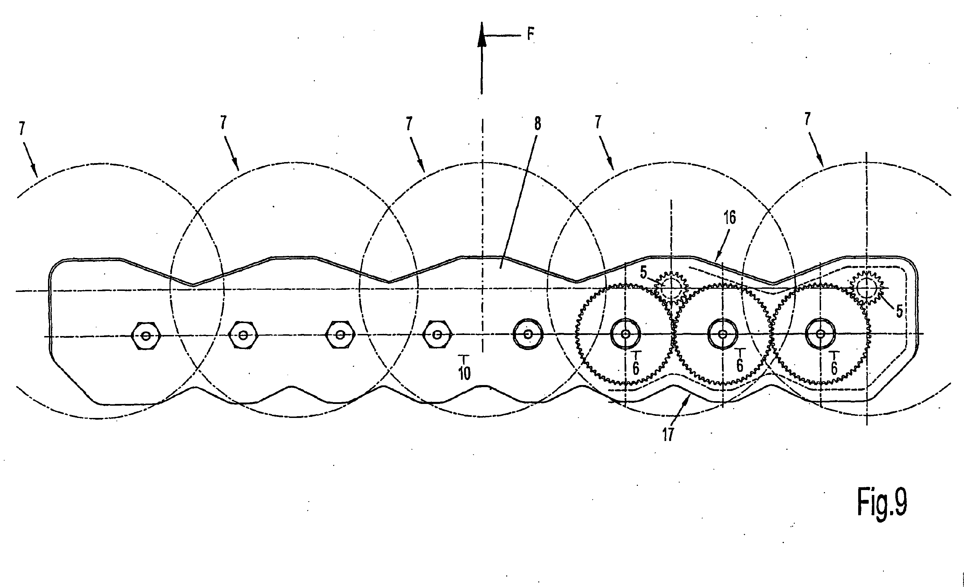

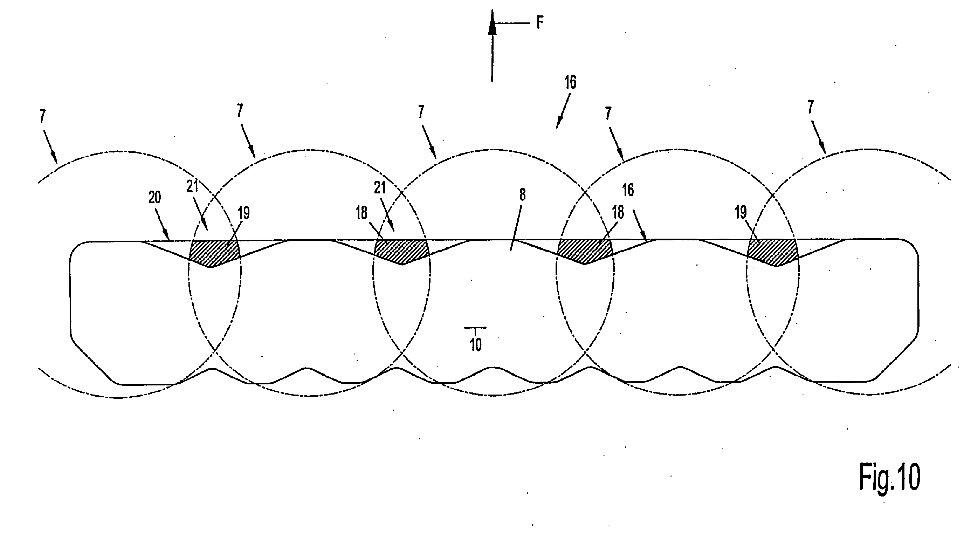

In Fig. 8 zeigt die Ansicht Fig. 7 in einer diametralen Ansicht und Fig.9 und Fig.10 zeigen das Mähwerk gemäß Fig.1 in einer Draufsicht ohne Mähscheiben. Fig.9 zeigt damit in anschaulicher Darstellung den wellenförmigen Verlauf der vorderen Kontur 16 und auch einen wellenförmigen Verlauf der hinteren Kontur 17 der Seitenwand 11 des Getriebegehäuses 8. Insbesondere in Fahrtrichtung F vor dem Getriebegehäuses 8 wird damit der schraffierte Zugewinn an Schnittfläche 18,19 in den Wellentälern 21 der vorderen Kontur 16 deutlich, welche von den umlaufenden Mähklingen 4 innerhalb der Konturkreises 7 liegend, zusätzlich gegenüber einer gerade verlaufenden Linie 20, welche die Abschlusskante eines abgekanteten Blechgehäuses bilden würde, überdeckt werden und somit von den Klingen mähtechnisch erreichbar sind.

Fig.11 zeigt den Schnitt A-A durch den Mähbalken gemäß Fig.4, wobei die Getriebeseitenwand 11 des Getriebegehäuses 8 als Rechteck-Hohlprofil 14 ausgebildet ist. Fig.12 zeigt den Schnitt A-A durch den Mähbalken analog Fig.4, jedoch mit einer alternativen Ausführung der Ausgestaltung vorderen Seitenwand 11 als Hohlprofil 14 jedoch mit einer schrägen Abweisfläche 22, die das Übergleiten von Bodenunebenheiten durch geringere Wiederstandskräfte begünstigt. Fig.13 zeigt die Einzelheit Z gemäß Fig.12 in vergrößerter Darstellung und Fig.14 zeigt die Einzelheit Z gemäß Fig.12 in vergrößerter Darstellung jedoch mit einer alternativen Ausführung der vorderen Seitenwandausgestaltung mit einem vollwandiger Querschnitt 23. Dabei ist der Getriebedeckel 10 und der Getriebewannenboden 15 mit der Getriebeseitenwand 11 mittels einer Nietverbindung 24 als Ausführungsbeispiel einer möglichen Verbindungstechnik dargestellt.

Getriebewannenboden (15), und Getriebedeckel (10) sind somit als planebene scheibenförmige Bauteile ausgebildet sind, welche die Getriebeseitenwand (11) nach der Sandwichbauweise zwischen sich aufnehmen.

Getriebewannenboden (15), Getriebeseitenwand (11) und Getriebedeckel (10) können als separate Einzelteile ausgebildet, die lösbar zusammengefügt, das Getriebegehäuse (8) bilden.

Wahlweise kann die Getriebewanne (9) auch lösbar zusammengefügt sein mit dem Getriebedeckel (10) das Getriebegehäuse (8) oder alternativ können Getriebewannenboden (15) und Getriebeseitenwand (11) ebenso eine unlösbar miteinander verbundene Einheit als Getriebewanne (9) bilden.

Ebenso ist es auch möglich, dass Getriebedeckel (10) und Getriebeseitenwand (11) eine unlösbar miteinander verbundene Einheit bilden die aber mit dem Getriebeboden (15) wiederum eine lösbare Einheit bilden.

In einer weiteren Ausgestaltungsmöglichkeit können Getriebewannenboden (15), Getriebeseitenwand (11) und Getriebedeckel (10) separate Einzelteile bilden, die unlösbar zusammengefügt, das Getriebegehäuse (8) bilden.

Dabei kann die unlösbare Verbindung beispielsweise eine Schweissverbindung oder eine .Klebeverbindung sein oder auch eine Mischverbindung aus Klebeverbindung oder Vernietung sein.

### Bezugszeichenliste

- 1: Mähbalken
- 2: innere Mähscheibe
- 3: äußere Mähscheibe
- 4: Mähklinge
- 5: Ritzel
- 6: Stirnräder
- 7: Flugkreis
- 8: Getriebegehäuse
- 9: Getriebewanne
- 10: Getriebedeckel
- 11: Getriebeseitenwand
- 12: Antriebskette
- 13: Fördertrommel
- 14: Hohlprofil
- 15: Getriebewannenboden
- 16: vordere Kontur
- 17: hintere Kontur
- 18: Zugewinn an Schnittfläche
- 19: Zugewinn an Schnittfläche
- 20: gerade Linie
- 21: Wellental
- 22: schrägen Abweisfläche
- 23: vollwandiger Querschnitt
- 24: Nietverbindung

- F: Fahrtrichtung

## Patentansprüche

1. Schelbenmähwerk zum Anbau an ein Trägerfahrzeug, beispielsweise für einen Traktor oder für ein selbstfahrendes Trägerfahrzeug, mit mehreren um aufrechte Kreiselachsen umlaufend angetriebenen mit Mähklingen (4) besetzten Mähscheiben (2,3), die in einem Getriebegehäuse (8) eines Mähbalkens (1) unterhalb der Mähscheiben gelagert sind, und die von einer aus Zahnrädern gebildeten Antriebskette (12), welche sich innerhalb des Getriebegehäuses (8) befinden und In diesem gelagert sind, angetrieben werden, **dadurch gekennzeichnet, dass** Getriebewannenboden (15) und Getriebedeckel (10) als plattenförmige Bauteile ausgebildet sind, welche die Getriebeseitenwand (11) nach der Sandwichbauweise zwischen sich aufnehmen, und wobei Getriebewannenboden (15), Getriebeseitenwand (11) und Getriebedeckel (10) separate Einzelteile bilden, die lösbar zusammengefügt das Getriebegehäuse (8) bilden, und wobei die vordere Kontur (16) des Getriebegehäuses (8) so ausgestaltet ist, dass diese die Zahnräder (5,6) der Antriebskette (12) wellenförmig umschließt und wobei die Getriebeseitenwand (11) aus einem Hohlprofil besteht.

2. Schelbenmähwerk nach Anspruch 6, **dadurch gekennzeichnet, dass** das Hohiprofil aus einem Rechteckholprofil besteht.

## Claims

1. A disc mowing mechanism for mounting to a carrier vehicle, for example for a tractor or for a self-propelled carrier vehicle, comprising a plurality of mowing discs (2, 3) which are driven in rotation about vertical axes of rotation and which are fitted with mowing blades (4) and which are mounted in a transmission housing (8) of a mowing cutter bar (1) beneath the mowing discs and which are driven by a drive train (12) formed from gear wheels disposed within the transmission housing (8) and mounted therein, **characterised in that** the transmission casing bottom (15) and the transmission cover (10) are plate-shaped components which accommodate the transmission side wall (11) between them in accordance with a sandwich structure and wherein the transmission casing bottom (15), the transmission side wall (11) and the transmission cover (10) form separate individual parts which releasably assembled form the transmission housing (8), and wherein the front contour (16) of the transmission housing (8) is such that it encloses the gear wheels (5, 6) of the drive train (12) in a wave configuration and wherein the transmission side wall (11) comprises a hollow profile member.

2. A disc mowing mechanism according to claim 1 **characterised in that** the hollow profile comprises a rectangular hollow profile.

## Revendications

1. Faucheuse à disques destinée à être montée sur un véhicule porteur, par exemple pour un tracteur ou un véhicule porteur automoteur, comprenant plusieurs disques de coupe (2, 3) qui sont entraînés en rotation autour d'axes de rotation verticaux, sont équipés de lames coupantes (4), sont montés dans un carter de protection d'engrenages (8) d'une barre de coupe (1), situé sous les disques de coupe, et sont entraînés par une chaîne d'entraînement (12) constituée de roues dentées qui se trouvent à l'intérieur du carter de protection d'engrenages (8) et sont montées dans celui-ci, **caractérisée par le fait que** le fond de cuve de carter (15) et le couvercle de carter (10) sont réalisés comme éléments en forme de plaques qui reçoivent entre eux la paroi latérale de carter (11), à la manière d'une structure en sandwich, le fond de cuve de carter (15), la paroi latérale de carter (11) et le couvercle de carter (10) constituant des éléments individuels distincts qui sont assemblés de manière démontable pour former le carter de protection d'engrenages (8), et le contour (16) avant du carter de protection d'engrenages (8) étant agencé de manière à ce qu'il entoure sous une forme ondulée les roues dentées (5, 6) de la chaîne d'entraînement (12), et la paroi latérale de carter (11) étant constituée d'un profilé creux.

2. Faucheuse à disques selon la revendication 1, **caractérisée par le fait que** le profilé creux est formé d'un profilé creux rectangulaire.
